# EUROPÄISCHE PATENTSCHRIFT

(11) **EP 1 426 130 B1**
(45) Veröffentlichungstag und Bekanntmachung des Hinweises auf die Patenterteilung: **11.06.2008**
(21) Anmeldenummer: 03024226.7
(22) Anmeldetag: 22.10.2003
(51) Int. Cl.: B23B 31/30

(54) **Löseeinheit**
Disengaging unit
Unité de déclenchement

(30) Priorität: 06.12.2002 DE 10257336
(43) Veröffentlichungstag der Anmeldung: 09.06.2004
(73) Patentinhaber: Röhm GmbH, 89567 Sontheim (DE)
(72) Erfinder: Hangleiter, Eugen, 89568 Hermaringen (DE)
(74) Vertreter: Hentrich, Swen

(56) Entgegenhaltungen:
- DE-U- 29 921 999
- US-A- 4 537 410

## Beschreibung

Die Erfindung betrifft eine Löseeinheit für eine Vorrichtung zum Spannen eines Werkzeugs mittels einer Haltezange, die durch einen in axialer Richtung der Arbteitsspindel über eine Zugstange verstellbaren Spannkopf betätigbar ist, mit einem der Verstellung der Zugstange dienenden, in einer zwei Druckmittelanschlüsse aufweisenden Kolbenkammer angeordneten Lösekolben.

Vorrichtungen zum Spannen eines Werkzeuges mit einem Hohlschaftkegel oder einem Steilkegel sind beispielsweise aus der DE 41 38 974 A1 oder DE 299 22 642 U1 bekannt, durch die Werkzeuge sicher ergriffen, gespannt und auch wieder gelöst werden können. Damit das Werkzeug nach dem Lösen durch eine Wechselvorrichtung sicher, kontrolliert und schnell ergriffen werden kann, wird auf das Werkzeug durch die an die Spannvorrichtung angesetzte Löseeinheit, zu der beispielhaft auf die DE 299 21 999 U1 verwiesen werden, ein Ausstoßimpuls ausgeübt, wobei die Haltezange auch dazu dient, das durch die Löseeinheit ausgestoßene Werkzeug in einem vorgegebenen Ausstoßhubbereich zu halten. Bei aus dem Stand der Technik bekannten Löseeinheiten ergibt sich das Problem, daß das Werkzeug zwar zufriedenstellend gelöst wird, daß aber das Werkzeug zuweilen zu stark beschleunigt wird und damit eine nicht genau definierte Axiallage einnimmt, die für das Ergreifen des Werkzeuges durch die Wechselvorrichtung erforderlich ist. Eine übermäßige Versteifung der aus der DE 299 22 642 U1 bekannten federnden Segmente der Haltezange ist nicht möglich, da damit der Wechsel des Werkzeuges sowohl beim Entnehmen aus der Haltezange als auch bei dem Einführen in die Haltezange zu stark erschwert und weiterhin die Lebensdauer beeinträchtigt würde.

Der Erfindung liegt daher die Aufgabe zugrunde, eine Löseeinheit der eingangs genannten Art so auszubilden, daß eine ausreichend schnelle Verstellung des Lösekolbens über den gesamten Hubweg zur Verfügung steht, zugleich aber die Geschwindigkeit des Lösekolbens kurz vor dem Ausstoßen des Werkzeuges wirkungsvoll gebremst werden soll.

Diese Aufgabe wird nach der Erfindung bei einer Löseeinheit der eingangs genannten Art dadurch gelöst, daß in der Kolbenkammer vor dem ersten Druckmittelanschluß, der bezogen auf die Strömungsrichtung des Druckmittels beim Lösen des Werkzeugs stromab liegt, ein Dichtring ausgebildet ist, daß der Lösekolben einen Kolbenhals aufweist, der den Dichtring unter Ausbildung eines Ringspaltes durchgreift, und daß am Kolbenhals ein den Ringspalt vor Erreichen des Maximalhubs abdichtender Halsbund ausgebildet ist.

Mit dieser Gestaltung ist der Vorteil verbunden, daß eine starke Beschleunigung des Lösekolbens und damit schnelle Verstellung möglich ist, der Lösekolben aber nicht mit einer Geschwindigkeit auf die Zugstange trifft, die diese in unzulässiger Weise beschleunigen würde. Vielmehr liegt eine Dämpfung des Lösekolbens in seiner Endlage vor, die eine genau dosierte Impulsübertragung auf die Zugstange ermöglicht.

Günstig ist dabei, wenn der Halsbund auf der dem Dichtring zugewandten Seite konisch geformt ist, da so eine stetige Verminderung des wirksamen Strömungsquerschnittes im Ringspalt erfolgt und der Lösekolben dadurch nicht abrupt abgebremst wird. Zur flexiblen Handhabung des Dämpfungsverhaltens des Lösekolbens in seiner Endlage ist weiterhin vorgesehen, daß zwischen dem Dichtring und dem Lösekolben ein Drosselspalt in die Kolbenkammer mündet, da so nach dem Abdichten des Ringspaltes das in dem stromab liegenden Kompartiment der Kolbenkammer befindliche Druckmittel aus diesem Kompartiment definiert abfließen kann.

Wenn eine Stellschraube mit einem in den Drosselspalt ragenden Konus zur Variation der wirksamen Größe des Drosselspaltes vorgesehen ist, dann ergibt sich eine einfache Möglichkeit der bedarfsgerechten Optimierung des Drosselspaltes.

Hinschtlich des konstruktiven Aufbaus und der Fertigung ist es einfacher, wenn der Dichtring zweistückig mit dem die Kolbenkammer aufweisenden Zylindergehäuse ausgebildet ist. Dann bietet sich insbesondere der weitere große Vorteil, die Löseeinheit so ausbilden zu können, daß der Dichtring in der Kolbenkammer axial verstellbar zwischen einem Sicherungsring und der Kammerwandung gelagert ist, und daß der Dichtring auf der dem Lösekolben zugewandten Seite mindestens einen Strömungskanal aufweist, der den Dichtring axial nicht vollständig durchsetzt. Bei dieser besonders bevorzugten Ausführungsform ergibt sich der große Vorteil, daß zwar die Endlagendämpfung des Lösekolbens beim Lösen ausgenutzt werden kann durch eine Verminderung des wirksamen Strömungsquerschnittes, daß aber die Verstellung des Lösekolbens für das Spannen des Werkzeuges nicht durch den zur Verfügung stehenden Drosselspalt und den sich erst wieder öffnenden Ringspalt limitiert ist, sondern das Druckmedium um den Dichtring nach dessen axialer Verstellung zum Sicherungsring einen Bypass nutzen kann, der um den Dichtring und durch dessen Strömungskanal führt.

Um eine Vergrößerung des zur Verfügung stehenden effektiven Strömungsquerschnitts zu erzielen, ist der Strömungskanal mehrfach, gleichmäßig über den Umfang verteilt vorgesehen.

Zur Verbesserung der metallischen Dichtung zwischen dem Dichtring und dem Halsbund ist die Gestaltung des Dichtringes so gewählt, daß der Dichtring einen Ringflansch zur Anlage an dem Halsbund aufweist.

Es hat sich als günstig erwiesen, wenn der axiale Verstellweg des Dichtringes zwischen der Kammerwandung und dem Sicherungsring 0,1 mm bis 1,5 mm, vorzugsweise 0,5 mm beträgt.

Im folgenden wird die Erfindung an einem in der Zeichnung dargestellten Ausführungsbeispiel näher erläutert; es zeigen:
- Fig. 1: einen Längsschnitt durch die erfindungsgemäße, mit der Zugstange interagierende Löseeinheit, oben in der Spannstellung, unten in der Lösestellung gezeigt,

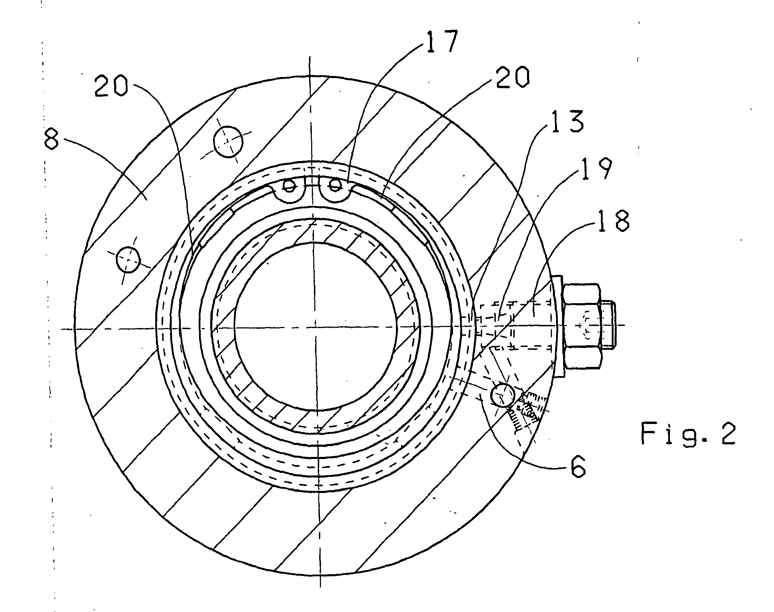

- Fig. 2: den Schnitt II - II aus Figur 1,
- Fig. 3: das Detail III aus Figur 1, und
- Fig. 4: das Detail IV aus Figur 1.

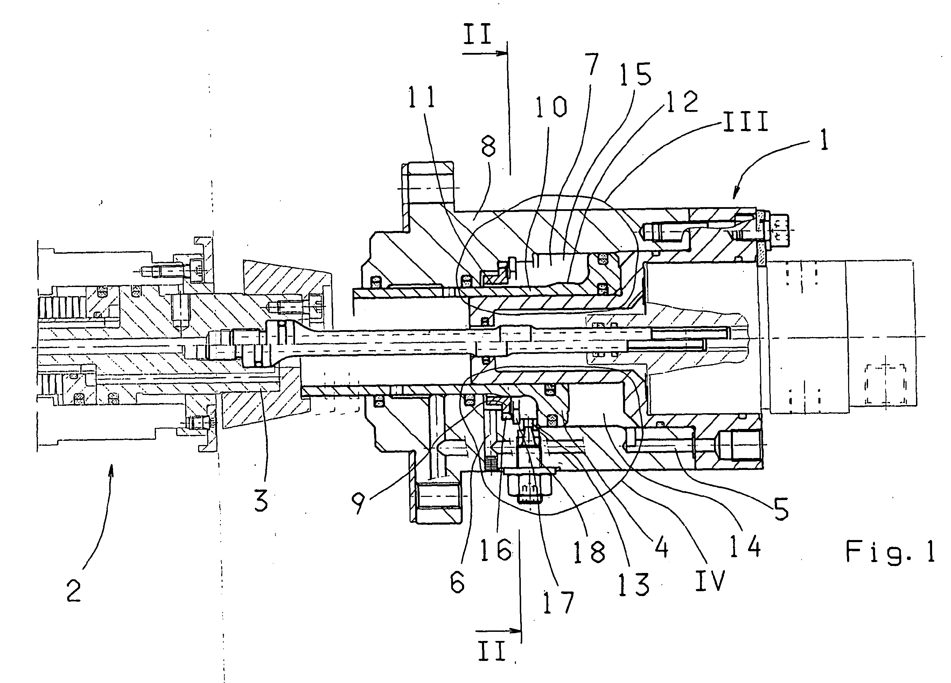

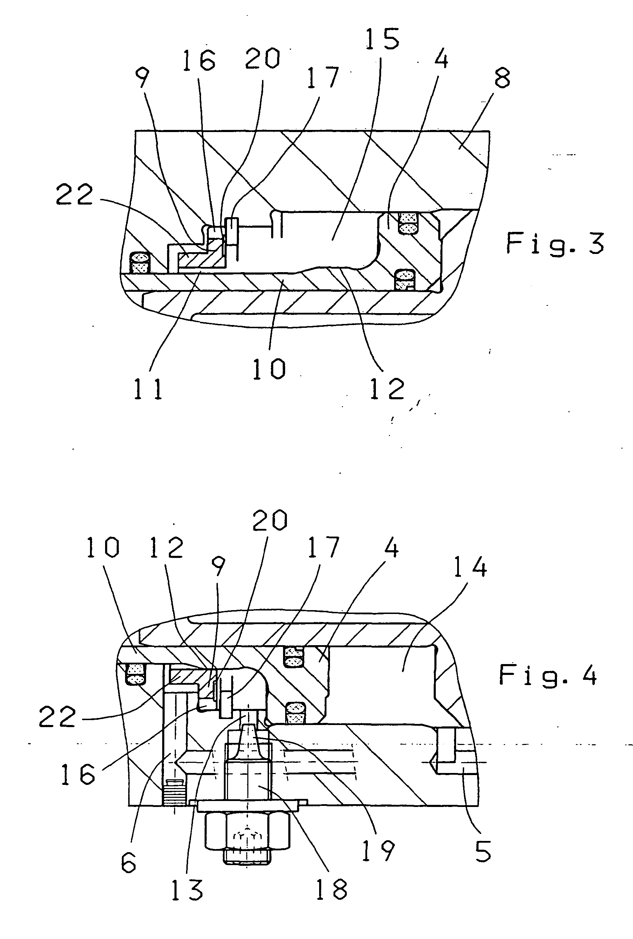

In der Zeichnung dargestellt ist eine Löseeinheit 1, die an einer Vorrichtung 2 eingesetzt wird, die zum Spannen eines Werkzeugs mittels einer Haltezange dient, die durch einen in axialer Richtung der Arbeitsspindel über eine Zugstange 3 verstellbaren Spannkopf betätigbar ist. Zur Erläuterung der Löseeinheit 1 sind in der Zeichnung von der Spannvorrichtung 2 nur die Bauteile gezeigt, die unmittelbar mit der Löseeinheit 1 interagieren und zu deren Verständnis erforderlich sind, nämlich insbesondere die Zugstange 3. Die Löseeinheit 1 umfasst einen der Verstellung der Zugstange 3 dienenden Lösekolben 4, der in einer zwei Druckmittelanschlüsse 5, 6 aufweisenden Kolbenkammer 7 angeordnet ist. Die Kolbenkammer 7 ist in dem Zylindergehäuse 8 ausgebildet. In der Kolbenkammer 7 ist vor dem ersten Druckmittelanschluss 6, der bezogen auf die Strömungsrichtung des Druckmittels beim Lösen des Werkzeugs stromab liegt, also in der Figur 1 der linke Druckmittelanschluss 6, ein Dichtring 9 ausgebildet, der zweistückig mit dem die Kolbenkammer 7 aufweisenden Zylindergehäuse 8 gestaltet ist. Der Lösekolben 4 weist einen Kolbenhals 10 auf, der den Dichtring 9 unter Ausbildung eines Ringspaltes 11 durchgreift, wobei am Kolbenhals 10 ein den Ringspalt 11 vor Erreichen des Maximalhubs abdichtender Halsbund 12 ausgebildet ist, der auf der dem Dichtring 9 zugewandten Seite konisch geformt ist. Zwischen dem Dichtring 9 und dem Lösekolben 4 mündet ein Drosselspalt 13 in die Kolbenkammer 7, die, wie insbesondere aus Figur 4 zu ersehen, drei Kompartimente 14, 15, 16 aufweist, nämlich das dem zweiten Druckmittelanschluss 5 zugeordnet erste Kompartiment 14 rechts von dem Lösekolben 4, das Kompartiment 15 links von dem Lösekolben 4, in das der Drosselspalt 13 mündet, sowie ein drittes Kompartiment 16 links von dem Sicherungsring 17, der in der Kolbenkammer 7 angeordnet ist, um den axialen Verstellweg des axial beweglichen Dichtringes 9 zu begrenzen.

Am Kolbenhals 10 ist der den Ringspalt 11 vor Erreichen des Maximalhubs abdichtende Halsbund 12 ausgebildet, so daß nach dem Erreichen der aus Figur 4 ersichtlichen Stellung des Lösekolbens 4 der Ringspalt 11 abgedichtet ist und das Druckmedium aus dem zweiten Kompartiment 15 nur noch über den Drosselspalt 13 abgeführt werden kann, so daß sich bei der Verstellung des Lösekolbens 4 eine Endlagendämpfung ergibt beim Erreichen des für das Ausstoßen des Werkzeuges erforderlichen Maximalhubs. Über eine Stellschraube 18 mit einem in den Drosselspalt 13 ragenden Konus 19 kann die wirksame Größe des Drosselspaltes 13 variiert werden.

Wie insbesondere aus den Detaildarstellungen der Figuren 3 und 4 ersichtlich, weist der Dichtring 9 auf der dem Lösekolben 4 zugewandten Seite mindestens einen Strömungskanal 20 auf, der den Dichtring 9 axial nicht vollständig durchsetzt. Soll zum Spannen des Werkzeuges der Lösekolben 4 wieder in die Spannstellung der Figur 3 verstellt werden, wird über den ersten Druckmittelanschluß 6 Druckmedium zugeführt, das den Dichtring 9 gegen den Sicherungsring 17 verstellt, wodurch das dritte Kompartiment 16 unmittelbaren Kontakt mit dem ersten Druckmittelanschluß 6 erhält. Infolge des Strömungskanals 20, der auch mehrfach vorgesehen sein kann, besteht eine Verbindung zwischen dem dritten Kompartiment 16 und dem zweiten Kompartiment 15, so daß ohne die durch den Drosselspalt 13 und den Ringspalt 11 gegebenen Begrenzungen Druckmittel in großen Mengen dem zweiten Kompartiment 15 zugeführt werden kann und die Verstellung des Lösekolbens 4 von der Lösestellung in die Spannstellung nicht durch den nur für die umgekehrte Bewegung erforderlichen Ringspalt 11 und den Drosselspalt 13 begrenzt ist.

## Patentansprüche

1. Löseeinheit für eine Vorrichtung zum Spannen eines Werkzeugs mittels einer Haltezange, die durch einen in axialer Richtung der Arbeitsspindel über eine Zugstange (3) verstellbaren Spannkopf betätigbar ist, mit einem der Verstellung der Zugstange (3) dienenden, in einer zwei Druckmittelanschlüsse (5, 6) aufweisenden Kolbenkammer (7) angeordneten Lösekolben (4), **dadurch gekennzeichnet, daß** in der Kolbenkammer (7) vor dem ersten Druckmittelanschluß (6), der bezogen auf die Strömungsrichtung des Druckmittels beim Lösen des Werkzeugs stromab liegt, ein Dichtring (9) ausgebildet ist, daß der Lösekolben (4) einen Kolbenhals (10) aufweist, der den Dichtring (9) unter Ausbildung eines Ringspaltes (11) durchgreift, und daß am Kolbenhals (10) ein den Ringspalt (11) vor Erreichen des Maximalhubs abdichtender Halsbund (12) ausgebildet ist.

2. Löseinheit nach Anspruch 1, **dadurch gekennzeichnet, daß** der Halsbund (12) auf der dem Dichtring (9) zugewandten Seite konisch geformt ist.

3. Löseeinheit nach Anspruch 1 oder 2, **dadurch gekennzeichnet, daß** zwischen dem Dichtring (9) und dem Lösekolben (4) ein Drosselspalt (13) in die Kolbenkammer (7) mündet.

4. Löseeinheit nach Anspruch 3, **dadurch gekennzeichnet, daß** eine Stellschraube (18) mit einem in den Drosselspalt (13) ragenden Konus (19) zur Variation der wirksamen Größe des Drosselspaltes (13) vorgesehen ist.

5. Löseeinheit nach einem der Ansprüche 1 bis 4, **dadurch gekennzeichnet, daß** der Dichtring (9) zweistückig mit dem die Kolbenkammer (7) aufweisenden Zylindergehäuse (8) ausgebildet ist.

6. Löseeinheit nach Anspruch 5, **dadurch gekennzeichnet, daß** der Dichtring (9) in der Kolbenkammer (7) axial verstellbar zwischen einem Sicherungsring (17) und der Kammerwandung gelagert ist, und daß der Dichtring (9) auf der dem Lösekolben (4) zugewandten Seite mindestens einen Strömungskanal (20) aufweist, der den Dichtring (9) axial nicht vollständig durchsetzt.

7. Löseeinheit nach Anspruch 6, **dadurch gekennzeichnet, daß** der Strömungskanal (20) mehrfach, gleichmäßig über den Umfang verteilt vorgesehen ist.

8. Löseeinheit nach einem der Ansprüche 1 bis 7, **dadurch gekennzeichnet, daß** der Dichtring (9) einen Ringflansch (22) zur Anlage an dem Halsbund (12) aufweist.

9. Löseeinheit nach einem der Ansprüche 6 bis 8, **dadurch gekennzeichnet, daß** der axiale Verstellweg des Dichtringes (9) zwischen der Kammerwandung und dem Sicherungsring (17) 0,1 mm bis 1,5 mm, vorzugsweise 0,5 mm beträgt.

## Claims

1. A release unit for an apparatus for clamping a tool by means of a holding collet which is actuable by a clamping head displaceable in the axial direction of the working spindle by way of a pulling rod (3), comprising a release piston (4) which serves for displacement of the pulling rod (3) and which is arranged in a piston chamber (7) having two pressure fluid connections (5, 6), **characterised in that** a sealing ring (9) is provided in the piston chamber (7) in front of the first pressure fluid connection (6) which is downstream in relation to the direction of flow of the pressure fluid upon release of the tool, that the release piston (4) has a piston neck (10) which engages through the sealing ring (9) to form an annular gap (11) and that a neck shoulder (12) which seals off the annular gap (11) before the maximum stroke is reached is provided on the piston neck (10).

2. A release unit according to claim 1 **characterised in that** the neck shoulder (12) is of a conical configuration on the side towards the sealing ring (9).

3. A release unit according to claim 1 or claim 2 **characterised in that** a throttle gap (13) opens into the piston chamber (7) between the sealing ring (9) and the release piston (4).

4. A release unit according to claim 3 **characterised in that** there is provided an adjusting screw (18) having a cone (19) projecting into the throttle gap (13) for varying the operative size of the throttle gap (13).

5. A release unit according to one of claims 1 to 4 **characterised in that** the sealing ring (9) is of a two-piece construction with the cylinder housing (8) having the piston chamber (7).

6. A release unit according to claim 5 **characterised in that** the sealing ring (9) is supported in the piston chamber (7) axially displaceably between a securing ring (17) and the chamber wall and the sealing ring (9) on the side towards the release piston (4) has at least one flow passage (20) which does not completely extend axially through the sealing ring (9).

7. A release unit according to claim 6 **characterised in that** the flow passage (20) is provided as a plurality thereof distributed uniformly over the periphery.

8. A release unit according to one of claims 1 to 7 **characterised in that** the sealing ring (9) has an annular flange (22) for bearing against the neck shoulder (12).

9. A release unit according to one of claims 6 to 8 **characterised in that** the axial displacement travel of the sealing ring (9) between the chamber wall and the securing ring (17) is 0.1 mm to 1.5 mm, preferably 0.5 mm.

## Revendications

1. Unité de desserrage, destinée à un dispositif de serrage d'un outil au moyen d'une pince de maintien pouvant être actionnée par une tête de serrage déplaçable par l'intermédiaire d'une barre de traction (3), dans le sens axial de la broche de travail, comprenant un piston de desserrage (4) qui sert à déplacer la barre de traction (3) et est disposé dans une chambre de piston (7) présentant deux raccords de fluide sous pression (5, 6), **caractérisée par le fait qu'**une bague d'étanchéité (9) est réalisée dans la chambre de piston (7), avant le premier raccord de fluide sous pression (6) situé en aval par rapport à la direction d'écoulement du fluide sous pression lors du desserrage de l'outil, **par le fait que** le piston de desserrage (4) présente un col de piston (10) qui traverse la bague d'étanchéité (9) en formant un espace annulaire (11), et **par le fait qu'**un collet (12) est façonné sur le col de piston (10) et obture l'espace annulaire (11) avant que la course maximale ne soit atteinte.

2. Unité de desserrage selon la revendication 1, **caractérisée par le fait que** le collet (12) est conformé en cône sur son côté tourné vers la bague d'étanchéité (9).

3. Unité de desserrage selon la revendication 1 ou 2, **caractérisée par le fait qu'**une fente d'étranglement (13) débouche dans la chambre de piston (7), entre la bague d'étanchéité (9) et le piston de desserrage (4).

4. Unité de desserrage selon la revendication 3, **caractérisée par le fait qu'**une vis de réglage (18), comportant un cône (19) qui avance dans la fente d'étranglement (13), est prévue pour faire varier la dimension effective de ladite fente d'étranglement (13).

5. Unité de desserrage selon une des revendications 1 à 4, **caractérisée par le fait que** la bague d'étanchéité (9) est réalisée en deux parties avec le carter de cylindre (8) présentant la chambre de piston (7).

6. Unité de desserrage selon la revendication 5, **caractérisée par le fait que** la bague d'étanchéité (9) est montée dans la chambre de piston (7), avec possibilité de déplacement axial entre une bague de retenue (17) et la paroi de la chambre, et **par le fait que** la bague d'étanchéité (9), sur sa face tournée vers le piston de desserrage (4), présente au moins un conduit d'écoulement (20) qui ne traverse pas complètement la bague d'étanchéité (9) dans le sens axial.

7. Unité de desserrage selon la revendication 6, **caractérisée par le fait que** le conduit d'écoulement (20) est prévu plusieurs fois, avec répartition uniforme des conduits sur le pourtour.

8. Unité de desserrage selon une des revendications 1 à 7, **caractérisée par le fait que** la bague d'étanchéité (9) présente un collet annulaire (22) pour venir en appui contre le collet (12).

9. Unité de desserrage selon une des revendications 6 à 8, **caractérisée par le fait que** la course de déplacement axiale de la bague d'étanchéité (9) entre la paroi de chambre et la bague de retenue (17) est comprise entre 0,1 mm et 1,5 mm et est de préférence de 0,5 mm.
